# EUROPÄISCHE PATENTSCHRIFT

(11) **EP 1 567 804 B1**
(45) Veröffentlichungstag und Bekanntmachung des Hinweises auf die Patenterteilung: **17.05.2006**
(21) Anmeldenummer: 03810442.8
(22) Anmeldetag: 05.11.2003
(51) Int. Cl.: F21V 14/04

(54) **REFLEKTORANORDNUNG MIT HINTEREINANDER ANGEORDNETEN LEUCHTMITTELN**
REFLECTOR ARRANGEMENT COMPRISING SUCCESSIVELY ARRANGED ILLUMINATION MEANS
ENSEMBLE REFLECTEUR COMPORTANT DES SOURCES LUMINEUSES PLACEES L'UNE DERRIERE L'AUTRE

(30) Priorität: 06.11.2002 DE 10252283
(43) Veröffentlichungstag der Anmeldung: 31.08.2005
(73) Patentinhaber: Briese, Hans-Werner Friedrich, 22303 Hamburg (DE)
(72) Erfinder: Briese, Hans-Werner Friedrich, 22303 Hamburg (DE)
(74) Vertreter: Wenzel & Kalkoff
(86) Internationale Anmeldenummer: PCT/EP2003/012360
(87) Internationale Veröffentlichungsnummer: WO 2004/042274

(56) Entgegenhaltungen:
- DE-A- 19 749 181
- US-A- 1 262 394
- US-A- 4 757 425
- US-A1- 2002 093 827
- PATENT ABSTRACTS OF JAPAN vol. 015, no. 057 (M-1080), 12. Februar 1991 (1991-02-12) -& JP 02 288001 A (NISSAN MOTOR CO LTD), 28. November 1990 (1990-11-28)

## Beschreibung

Die Erfindung betrifft eine Reflektoranordnung zur Schatteneinstellung im Bereich der Fotografie und des Films, umfassend einen ersten Reflektor, einen zweiten Reflektor, der innerhalb des ersten Reflektors angeordnet ist, wobei beide Reflektoren im Bereich und vorzugsweise auf einer Mittelachse der Reflektoranordnung angeordnet sind, zwei hintereinander nahe der Mittelachse angeordnete Leuchtmittel und ein Trägerelement zur Aufnahme mindestens eines der Leuchtmittel.

Eine solche Reflektoranordnung bzw. Scheinwerferanordnung ist der DE 197 49 181 A1 zu entnehmen. Diese Anordnung dient allerdings zum Wechsel zwischen Abblendlicht und Fernlicht. In einem anderen Bereich werden derartige bekannte Reflektoranordnungen zur Schatteneinstellung eingesetzt, nämlich insbesondere im Bereich der Fotografie oder des Films. Im Bereich der Mittelachse der Reflektoranordnung ist das Trägerelement angeordnet, das auch mindestens eines der Leuchtmittel trägt. Durch die Leuchtmittel und die Reflektoranordnung wird das zu beleuchtende Objekt angestrahlt. Dabei sorgt die Lichtstrahlung der Leuchtmittel einschließlich der an den Reflektoren reflektierten Lichtstrahlen für einen Schatten am Objekt.

Gerade im Bereich der Fotografie ist es jedoch erforderlich, eine möglichst variable Wiedergabe des Objektes zu ermöglichen. Des weiteren soll der Kontrastumfang präzise und in einem sehr großen Umfang einstellbar sein, nämlich von schattenfrei bis tiefer Schatten. Das bedeutet z.B., daß tiefe bzw. harte Schatten soweit aufgehellt werden, daß sie transparent werden, also sehr dunkle Bereiche nuanciert einstellbar sind. Verwendet man allerdings die herkömmlichen Reflektoranordnungen, ist lediglich jeweils ein reflektorspezifischer Schatten bzw. eine geringe Schattenveränderung zu erzeugen. Mit anderen Worten bestimmt die Reflektoreinheit im wesentlichen die Charakteristik des Schattens, so daß für jede Charakteristik eine separate Reflektoranordnung eingesetzt werden muß. Um diese Schatten nun zu verändern, also abzudunkeln, aufzuhellen, Licht diffus zu gestalten oder dergleichen, werden üblicherweise zusätzliche Reflektoren, Aufheller, Diffusoren oder dergleichen verwendet. Neben dem zusätzlichen Aufwand durch Aufstellen weiterer Reflektoren, Aufheller, Diffusoren oder anderer Apparaturen führt dies auch zu zusätzlichen Schatten, da durch die Reflektoren Seitenlicht erzeugt wird. Um eine gewünschte Bildqualität zu erhalten, ist daher ein erheblicher Aufbau zu leisten, der aus mehreren Reflektoren, Aufhellern, Diffusoren oder dergleichen bestehen kann.

Aus der DE 38 09 333 ist eine fotografische Leuchte bekannt, bei der innerhalb eines Hauptreflektors ein Nebenreflektor angeordnet ist. Zur Aufnahme mehrerer nebeneinander angeordneter Lampen ist ein Träger vorgesehen. Diese Leuchte ermöglicht aber nur eine sehr begrenzte Einstellung des Schattens.

Es ist daher Aufgabe der Erfindung, eine Reflektoranordnung zu schaffen, die eine individuelle Einstellung eines Schattens, insbesondere der Charakteristik und des Kontrastes, gewährleistet.

Diese Aufgabe wird durch eine Reflektoranordnung der eingangs genannten Art dadurch gelöst, daß das Trägerelement in der Weise als eine Fokussiereinheit für die Leuchtmittel ausgebildet ist, daß die Fokussiereinheit axial in Längsrichtung der Mittelachse der Reflektoren relativ zum äußeren Reflektor verschiebbar ist, wobei der zweite Reflektor im Bereich des Leuchtmittels auf der Fokussiereinheit angeordnet ist. Durch diese Anordnung ist es möglich, die Charakteristik der Beleuchtung zu variieren, indem der Anteil der direkten Lichtstrahlen zur Erzeugung eines harten Schattens und der Anteil der indirekten, reflektierten Lichtstrahlen zur Aufhellung des Schattens veränderbar ist. Je nach Position des zusätzlichen Reflektors relativ zum äußeren größeren Reflektor einerseits und zu den Leuchtmitteln andererseits läßt sich ein unterschiedlicher Kontrast erzielen bzw. einstellen. Der zusätzliche zweite Reflektor schirmt einen Teil der Lichtstrahlen derart ab, daß ein Auftreffen auf den äußeren großen Reflektor verhindert wird. Dadurch wird der Anteil des reflektierten Lichtes reduziert. Je mehr Lichtstrahlen dagegen vom äußeren Reflektor reflektiert werden, desto größer ist der Effekt der Aufhellung des Schattens. Durch die Anordnung der beiden Reflektoren im Bereich und bevorzugt auf derselben Mittelachse wird eine konzentrische Aufhellung erreicht und eine homogene Beleuchtungscharakteristik erzeugt. Durch die Anordnung von zwei Leuchtmitteln ist eine vielfältige Einstellung des Kontrastes des Schattens gewährleistet, da ein Leuchtmittel sogenanntes "weiches" Licht zur Aufhellung des Schattens und das andere Leuchtmittel sogenanntes "hartes" Licht zur Bildung eines harten Schattens erzeugen kann. Durch die Kombination von zwei Leuchtmitteln mit zwei Reflektoren ist die gesamte Bandbreite des Kontrastes einstellbar, nämlich Licht mit ausschließlich hartem Schatten und hohem Kontrast sowie Licht mit ausschließlich weichem Schatten und niedrigem Kontrast.

Vorteilhafterweise ist der zusätzliche zweite Reflektor in Längsrichtung der Mittelachse des Trägerelementes bzw. der Fokussiereinheit verschiebbar, so daß der Anteil von direkter und indirekter Strahlung und damit von hartem und weichem Schatten bzw. Licht individuell einstellbar ist.

In einer bevorzugten Weiterbildung der erfindungsgemäßen Reflektorkombination ist jedes Leuchtmittel separat ansteuerbar, so daß die Lichtcharakteristik zusätzlich über die Leuchtstärke bzw. Intensität der jeweiligen Leuchtmittel einstellbar sind. Damit ist eine noch größere Variabilität hinsichtlich der gewünschten Ausleuchtung mit einer einzigen Reflektoreinheit bzw. -anordnung gegeben.

Vorteilhafterweise ist im Bereich mindestens eines Leuchtmittels ein Filterelement angeordnet. Durch das oder jedes Filterelement bzw. eine Kombination der Filterelemente lassen sich weitere Einstellungen, insbesondere was die stufenlose farbige Tönung anbelangt, erreichen. Mit mehreren unterschiedlichen Farbfiltern lassen sich sogar beliebige Farbtöne mischen, so daß Fotos allein durch Voreinstellung der erfindungsgemäßen Reflektoranordnung kreativ und mit beliebiger Charakteristik erzielt werden können. Auf eine Nacharbeit kann vollständig verzichtet werden.

Weitere bevorzugte Ausgestaltungen der Erfindung gehen aus den Unteransprüchen und der Beschreibung hervor. Besonders bevorzugte Ausführungsformen werden anhand der beigefügten Zeichnung näher erläutert. In der Zeichnung zeigt:
- Fig. 1: eine Seitenansicht der Reflektoranordnung, wobei zur Veranschaulichung ein beleuchtetes Objekt mit Hintergrund dargestellt ist,
- Fig. 2: eine Seitenansicht einer weiteren Ausführungsform der Reflektoranordnung, wobei zur Veranschaulichung ein beleuchtetes Objekt mit Hintergrund dargestellt ist,
- Fig. 3: eine Seitenansicht einer Einzelheit der Reflektoranordnung gemäß Figur 1, und
- Fig. 4: eine Seitenansicht einer Einzelheit der Reflektoranordnung gemäß Figur 2.

Die im folgenden beschriebenen Reflektoranordnungen 10 werden insbesondere zu Beleuchtungszwecken in der Fotografie und im Film verwendet.

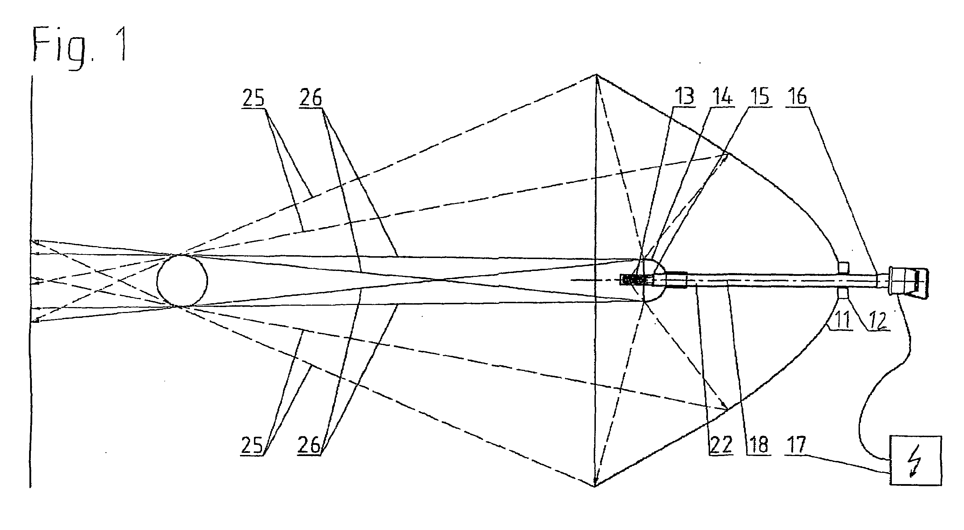

In der Figur 1 ist eine Reflektoranordnung dargestellt, die im wesentlichen aus einem ersten Reflektor 11, einem Trägerelement 12, einem Leuchtmittel 13 sowie einem zweiten Reflektor 14 besteht. Das Leuchtmittel 13 ist an einem freien Ende 15 des zylinderförmigen Trägerelementes 12, das zur Öffnung des vorzugsweise halbschalenartigen Reflektors 11 weist, angeordnet. An dem dem Leuchtmittel 13 gegenüberliegenden freien Ende 16 des Trägerelementes 12 ist eine netz- und oder akkubetriebene Energiequelle 17 zum Betrieb des Leuchtmittels 13 angeordnet. Die Energiequelle 17 ist steuer- und /oder regelbar, derart, daß die Leuchtstärke bzw. Intensität der Lichtstrahlen 25, 26 einstellbar ist.

Bei der in Figur 1 gezeigten Ausführungsform ist der kleine Reflektor 14 innerhalb des großen Reflektors 11 im Bereich des Trägerelementes 12 angeordnet. Beide Reflektoren 11, 14 sind im Bereich und vorzugsweise auf derselben Mittelachse 18 des Trägerelementes 12 angeordnet. Die Öffnungen beider Reflektoren 11, 14 weisen dabei in dieselbe Richtung. Das Trägerelement 12 ist zur Bildung einer Fokussiereinheit 22 für das Leuchtmittel 13 verschiebbar am Reflektor 11 angeordnet. Der Reflektor 14 ist auf der Fokussiereinheit 22 im Bereich des Leuchtmittels 13 angeordnet, wobei der Reflektor 14 das Leuchtmittel 13 bzw. die von dem Leuchtmittel 13 erzeugten Lichtstrahlen 25, 26 mindestens teilweise abdeckt. Das bedeutet, daß Lichtstrahlen 25, 26 des Leuchtmittels 13 mindestens zum Teil daran gehindert werden, auf die Innenseite 19 des Reflektors 11 zu treffen. Mit anderen Worten teilt der Reflektor 14 die Lichtstrahlen 25, 26 dahingehend, daß ein Teil der Lichtstrahlen, nämlich die Lichtstrahlen 25, auf den Reflektor 11 zur Erzeugung von "weichem" Licht bzw. "weichem" Schatten mit niedrigem Kontrast treffen. Ein anderer Teil der Lichtstrahlen, nämlich die Lichtstrahlen 26, werden durch den Reflektor 14 selbst zur Erzeugung des "harten" Lichtes bzw. "harten" Schattens mit hohem Kontrast reflektiert.

Der Reflektor 14 kann an unterschiedlichsten Positionen angeordnet sein, und zwar von einer Position, in der das Leuchtmittel 13 vollständig vom Reflektor 14 umgeben ist; so daß keine Lichtstrahlen 25 seitlich auf den äußeren Reflektor 11 treffen können, bis zu einer Position, an der sämtliche Lichtstrahlen 25 des Leuchtmittels 13 ungehindert auf Reflektor 11 treffen können. Durch Verstellung der Fokussiereinheit 22 axial in Längsrichtung derselben, also parallel zur Mittelachse 18, ist der Anteil der reflektierten Lichtstrahlen 25 durch den Reflektor 11 und der Lichtstrahlen 26 durch den Reflektor 14 veränderbar. Je tiefer sich der Reflektor 14 innerhalb des Reflektors 11 befindet, d.h. je weiter die Fokussiereinheit 22 zurück gefahren ist, desto größer ist der Anteil des am Reflektor 11 reflektierten Lichtes, mit der Folge, daß das durch das Leuchtmittel 13 abgestrahlte Licht einen weichen Beleuchtungseindruck erzeugt. Ist die Fokussiereinheit 22 dagegen maximal ausgefahren, derart, daß der Reflektor 14 das Auftreffen von Lichtstrahlen 25 auf den Reflektor 11 vollständig verhindert, so daß lediglich die Lichtstrahlen 26, die am Reflektor 14 reflektiert werden, zur Wirkung kommen, wird ein harten, dunkler Schatten am Objekt erzeugt.

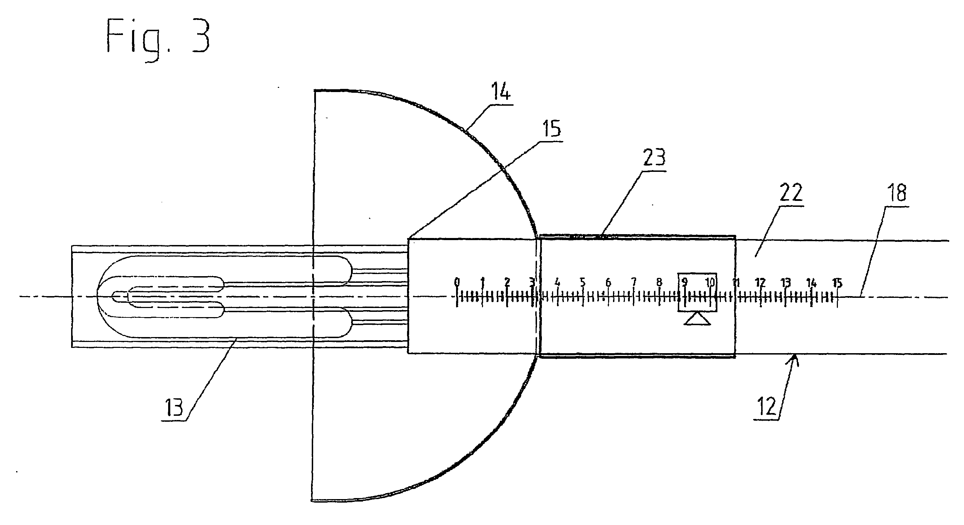

Eine bevorzugte Anordnung des Reflektors 14 im Bereich des Leuchtmittels 13 geht aus Figur 3 hervor. Der Reflektor 14 ist am freien Ende 15 der Fokussiereinheit 22 angeordnet, so daß er das Leuchtmittel 13 etwa zu einem ¼ umgibt. Mit anderen Worten ragen etwa ¾ des Leuchtmittels 13 aus dem Reflektor 14 heraus, so daß ein Großteil der Lichtstrahlen als Lichtstrahlen 25 auf den äußeren Reflektor 11 treffen können. Es ist jedoch auch jede andere Position des Reflektors 14 relativ zum Leuchtmittel 13 in Abhängigkeit der gewünschten Charakteristik möglich.

Um die Positionierung des Reflektors 14 variieren zu können, ist der Reflektor 14 selbst verschiebbar auf einer Hülse 23 oder dergleichen auf dem Trägerelement 12 bzw. der Fokussiereinheit 22 angeordnet. Durch eine Überlagerung der Verstellung der Fokussiereinheit 22 einerseits und des Reflektors 14 andererseits sind unbegrenzte und stufenlose Einstellmöglichkeiten des Kontrastes gewährleistet. Daß heißt, die Charakteristik der Reflektoranordnung 10 kann nach Belieben eingestellt werden.

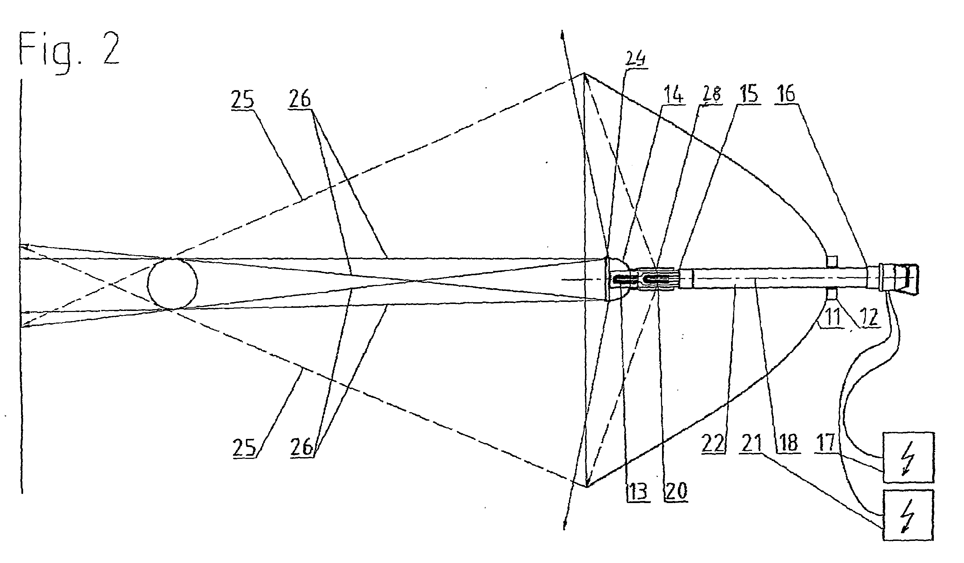

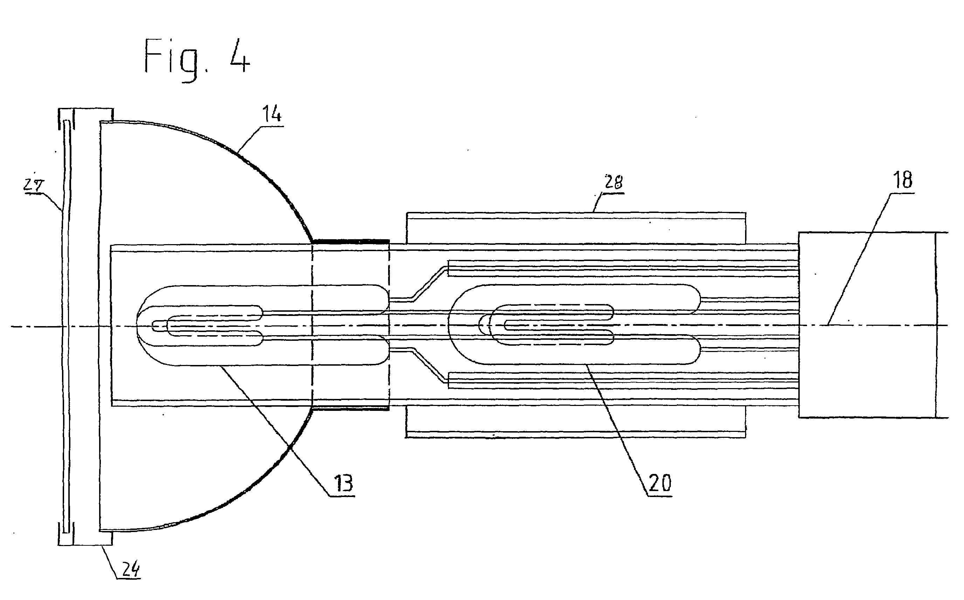

In der in Figur 2 gezeigten Ausführungsform ist eine Reflektoranordnung dargestellt, die in der Konstruktion und Funktion im wesentlichen der Reflektoranordnung gemäß Figur 1 entspricht, so daß für gleiche Teile gleiche Bezugsziffern gewählt sind. Zusätzlich weist die Reflektoranordnung aber ein weiteres Leuchtmittel 20 auf. Beide Leuchtmittel 13 und 20 sind hintereinander im Bereich des Trägerelementes 12 bzw. der Fokussiereinheit 22 angeordnet, wobei sich das Leuchtmittel 20 ausgehend vom freien Ende 15 hinter dem Leuchtmittel 13 befindet. Idealerweise sind die Leuchtmittel 13, 20 fluchtend hintereinander angeordnet. Der Reflektor 14 ist im Bereich des vorderen Leuchtmittels 13 angeordnet. Aus der Figur 4 ist ersichtlich, daß der Reflektor 14 das Leuchtmittel 13 in einer bevorzugten Anordnung vollständig umschließt. Das bedeutet, daß das Leuchtmittel 13 vollständig innerhalb des Reflektors 14 angeordnet ist und nicht über diesen hinausragt. Durch die Verstellbarkeit des Reflektors 14 einerseits und der Fokussiereinheit 22 andererseits sind jedoch beliebige Anordnungen erreichbar. Das vordere durch den Reflektor 14 abgeschirmte Leuchtmittel 13 dient vornehmlich zur Erzeugung von hartem Schatten, während das Leuchtmittel 20 vornehmlich zur Erzeugung von weichem Schatten dient.

Beide Leuchtmittel 13, 20 liegen in der Nähe der Mittelachse 18 und sind jeweils an eine separate Energiequelle 17, 21 angeschlossen. Bevorzugt befinden sich beide Leuchtmittel 13, 20 auf der gemeinsamen Mittelachse 18. Es ist alternativ auch denkbar, daß beide Leuchtmittel 13, 20 an eine gemeinsame Energiequelle angeschlossen und lediglich separat ansteuerbar sind. Durch die Möglichkeit der separaten Ansteuerung, also auch An- und Abschaltung, lassen sich die unterschiedlichsten Lichtverhältnisse einstellen. In einem nicht dargestellten Ausführungsbeispiel sind die Leuchtmittel 13, 20 versetzt zueinander angeordnet, derart, daß die Mittelachsen 18 parallel aber beabstandet zueinander oder in einem Winkel zueinander verlaufen. Auch die Reflektoren 11, 14 können alternativ zu den gezeigten Ausführungsformen versetzt und/oder geneigt zueinander angeordnet sein.

Bei weiteren Ausführungsformen ist mindestens im Bereich eines Leuchtmittels 13, 20 ein Filterelement vorgesehen. Für das Leuchtmittel 13 am freien Ende 15 des Trägerelementes 12 bzw. der Fokussiereinheit 22 ist ein üblicher Steckfilter 24 mit Aufnahmen für mehrere Filter 27 vorgesehen. Der Steckfilter 24 ist lösbar im Bereich des Reflektors 14 befestigt. In die Aufnahmen sind einzelne oder mehrere Filter 27 einführbar, so daß unterschiedlichste Farbkompositionen der Lichtstrahlen 25, 26 wählbar sind. Alternativ oder zusätzlich ist auch das Leuchtmittel 20 mit einem üblicherweise zylindrischen Filter 28 versehen, so daß auch die Lichtstrahlen 25 des Leuchtmittels 20 farblich ausgeprägt sein können.

## Patentansprüche

1. Reflektoranordnung zur Schatteneinstellung im Bereich der Fotografie und des Films, umfassend einen ersten Reflektor (11), einen zweiten Reflektor (14), der innerhalb des ersten Reflektors (11) angeordnet ist, wobei beide Reflektoren (11, 14) im Bereich und vorzugsweise auf einer Mittelachse (18) der Reflektoranordnung (10) angeordnet sind, zwei hintereinander nahe der Mittelachse (18) angeordnete Leuchtmittel (13, 20) und ein Trägerelement (12) zur Aufnahme mindestens eines der Leuchtmittel (13, 20), **dadurch gekennzeichnet, daß** das Trägerelement (12) in der Weise als eine Fokussiereinheit (22) für die Leuchtmittel (13, 20) ausgebildet ist, daß die Fokussiereinheit (22) axial in Längsrichtung der Mittelachse (18) der Reflektoren (11, 14) relativ zum äußeren Reflektor (11) verschiebbar ist, wobei der zweite Reflektor (14) im Bereich des Leuchtmittels (13) auf der Fokussiereinheit (22) angeordnet ist

2. Reflektoranordnung nach Anspruch 1, **dadurch gekennzeichnet, daß** der zweite Reflektor (14) axial in Längsrichtung der Mittelachse (18) auf der Fokussiereinheit (22) verschiebbar ist.

3. Reflektoranordnung nach Anspruch 1 oder 2, **dadurch gekennzeichnet, daß** die Leuchtmittel (13, 20) als Einheit mit der Fokussiereinheit (22) axial in Längsrichtung der Mittelachse (18) verschiebbar sind.

4. Reflektoranordnung nach einem der Ansprüche 1 bis 3, **dadurch gekennzeichnet, daß** das erste Leuchtmittel (13) an einem freien Ende (15) der Fokussiereinheit (22) und das zweite Leuchtmittel (20) fluchtend dahinter angeordnet ist.

5. Reflektoranordnung nach einem der Ansprüche 1 bis 3, **dadurch gekennzeichnet, daß** die Leuchtmittel (13, 20) versetzt zur Mittelachse (18) und/oder abgewinkelt zueinander angeordnet sind.

6. Reflektoranordnung nach einem der Ansprüche 1 bis 5, **dadurch gekennzeichnet, daß** jedes Leuchtmittel (13, 20) separat ansteuerbar ist, derart, daß die Leuchtstärke bzw. Intensität individuell einstellbar ist.

7. Reflektoranordnung nach einem der Ansprüche 1 bis 6, **dadurch gekennzeichnet, daß** jedes Leuchtmittel (13, 20) an eine separate Energiequelle (17, 21) angeschlossen ist.

8. Reflektoranordnung nach einem der Ansprüche 1 bis 7, **dadurch gekennzeichnet, daß** im Bereich mindestens eines Leuchtmittels (13, 20) ein Filterelement angeordnet ist.

9. Reflektoranordnung nach einem der Ansprüche 1 bis 8, **dadurch gekennzeichnet, daß** jedes Leuchtmittel (13, 20) mit einem Filterelement (24, 28) versehen ist.

10. Reflektoranordnung nach Anspruch 8 oder 9, **dadurch gekennzeichnet, daß** das oder jedes Filterelement (24, 28) mit austauschbaren Filtern (27) ausgebildet ist.

11. Reflektoranordnung nach einem der Ansprüche 1 bis 10, **dadurch gekennzeichnet, daß** die Reflektoren (11, 14) versetzt zur Mittelachse (18) und/oder abgewinkelt zueinander angeordnet sind.

## Claims

1. Reflector arrangement for the adjustment of shadow in the field of photography and film, including a first reflector (11), a second reflector (14) which is arranged inside the first reflector (11), wherein the two reflectors (11, 14) are arranged in the region of and preferably on a centre axis (18) of the reflector arrangement (10), two lighting means (13, 20) arranged one behind the other near the centre axis (18), and a carrier element (12) for receiving at least one of the lighting means (13, 20), **characterised in that** the carrier element (12) is constructed as a focusing unit (22) for the lighting means (13, 20) in such a way that the focusing unit (22) is slidable axially in the longitudinal direction of the centre axis (18) of the reflectors (11, 14) relative to the outer reflector (11), wherein the second reflector (14) is arranged in the region of the lighting means (13) on the focusing unit (22).

2. Reflector arrangement according to claim 1, **characterised in that** the second reflector (14) is slidable axially in the longitudinal direction of the centre axis (18) on the focusing unit (22).

3. Reflector arrangement according to claim 1 or 2, **characterised in that** the lighting means (13, 20) are slidable as a unit with the focusing unit (22) axially in the longitudinal direction of the centre axis (18).

4. Reflector arrangement according to any of claims 1 to 3, **characterised in that** the first lighting means (13) is arranged at a free end (15) of the focusing unit (22) and the second lighting means (20) is arranged in alignment therebehind.

5. Reflector arrangement according to any of claims 1 to 3, **characterised in that** the lighting means (13, 20) are offset from the centre axis (18) and/or arranged at an angle to each other.

6. Reflector arrangement according to any of claims 1 to 5, **characterised in that** each lighting means (13, 20) is separately controllable, such that the luminosity or intensity is individually adjustable.

7. Reflector arrangement according to any of claims 1 to 6, **characterised in that** each lighting means (13, 20) is connected to a separate energy source (17, 21).

8. Reflector arrangement according to any of claims 1 to 7, **characterised in that** in the region of at least one lighting means (13, 20) is arranged a filter element.

9. Reflector arrangement according to any of claims 1 to 8, **characterised in that** each lighting means (13, 20) is provided with a filter element (24, 28).

10. Reflector arrangement according to claim 8 or 9, **characterised in that** the or each filter element (24, 28) is designed with exchangeable filters (27).

11. Reflector arrangement according to any of claims 1 to 10, **characterised in that** the reflectors (11,14) are offset from the centre axis (18) and/or arranged at an angle to each other.

## Revendications

1. Agencement de réflecteurs destiné au réglages des ombres dans le domaine de la photographie et du film, ledit agencement de réflecteurs comportant un premier réflecteur (11), une deuxième réflecteur (14), qui est placé à l'intérieur du premier réflecteur (11), les deux réflecteurs (11, 14) étant placés dans la région de l'agencement de réflecteurs, et avantageusement sur un axe médian (18) de l'agencement de réflecteurs (10), deux moyens d'éclairage (13, 20), disposés l'un derrière l'autre près de l'axe médian (18) et un élément de support (12) destiné à recevoir au moins l'un des moyens d'éclairage (13, 20), **caractérisé en ce que** l'élément de support (12) est conformé en unité de focalisation (22) destinée aux moyens d'éclairage (13, 20), **en ce que** l'unité de focalisation (22) est mobile axialement dans une direction longitudinale de l'axe médian (18) des réflecteurs (11, 14) par rapport au réflecteur extérieur (11), le deuxième réflecteur (14) étant disposé dans la région du moyen d'éclairage (13) sur l'unité de focalisation (22).

2. Agencement de réflecteurs selon la revendication 1, **caractérisé en ce que** le deuxième réflecteur (14) est mobile axialement dans la direction longitudinale de l'axe médian (18) sur l'unité de focalisation (22).

3. Agencement de réflecteurs selon la revendication 1 ou 2, **caractérisé en ce que** les moyens d'éclairage (13, 20), en tant qu'unité dotée de l'unité de focalisation (22), sont mobiles axialement dans la direction longitudinale de l'axe médian (18).

4. Agencement de réflecteurs selon l'une des revendications 1 à 3, **caractérisé en ce que** le premier moyen d'éclairage (13) est placé à une extrémité libre (15) de l'unité de focalisation (22) et le deuxième moyen d'éclairage (20) est placé en arrière du premier moyen d'éclairage en étant aligné avec celui-ci.

5. Agencement de réflecteurs selon l'une des revendications 1 à 3, **caractérisé en ce que** les moyens d'éclairage (13, 20) sont placés angulairement l'un par rapport à l'autre et en étant décalés par rapport à l'axe médian (18).

6. Agencement de réflecteurs selon l'une des revendications 1 à 5, **caractérisé en ce que** chaque moyen d'éclairage (13, 20) peut être commandé séparément de sorte que la luminosité respectivement l'intensité est réglable individuellement.

7. Agencement de réflecteurs selon l'une des revendications 1 à 6, **caractérisé en ce que** chaque moyen d'éclairage (13, 20) est raccordé à une source d'énergie séparée (17, 21).

8. Agencement de réflecteurs selon l'une des revendications 1 à 7, **caractérisé en ce qu'**un élément de filtrage est placé dans la région d'au moins un moyen d'éclairage (13, 20).

9. Agencement de réflecteurs selon l'une des revendications 1 à 8, **caractérisé en ce que** chaque moyen d'éclairage (13, 20) est doté d'un élément de filtrage (24, 28).

10. Agencement de réflecteurs selon la revendication 8 ou 9, **caractérisé en ce que** l'élément de filtrage ou chaque élément de filtrage (24, 28) est conformé avec des filtres remplaçables (27).

11. Agencement de réflecteurs selon l'une des revendications 1 à 10, **caractérisé en ce que** les réflecteurs (11, 14) sont placés angulairement l'un par rapport à l'autre et en étant décalés par rapport à l'axe médian (18).
